(19) Europäisches Patentamt
European Patent Office
Office européen des brevets

(11) **EP 2 141 520 A1**

(12) **DEMANDE DE BREVET EUROPEEN**

(43) Date de publication:
**06.01.2010 Bulletin 2010/01**

(51) Int Cl.:
**G02B 5/18** (2006.01)   **G02B 6/30** (2006.01)
**G02B 6/34** (2006.01)

(21) Numéro de dépôt: **09164246.2**

(22) Date de dépôt: **30.06.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **02.07.2008  FR 0854489**

(71) Demandeur: **Commissariat à l'Energie Atomique
75015 Paris (FR)**

(72) Inventeurs:
• **Ben Bakir, Badhise
38000, GRENOBLE (FR)**
• **Tchelnokov, Alexei
38000, GRENOBLE (FR)**

(74) Mandataire: **Ilgart, Jean-Christophe
Brevalex
3, rue du Docteur Lancereaux
75008 Paris (FR)**

(54) **Dispositif de couplage à birefringence compensée**

(57) L'invention concerne un dispositif de couplage comprenant un substrat support ; une première couche (30) disposée sur le substrat support (1) et comprenant des premiers motifs (31) réalisés dans l'épaisseur de ladite première couche, lesdits premiers motifs étant agencés selon des rangées parallèles et périodiques ; une seconde couche (50) disposée sur la première couche et comprenant des seconds motifs (51) traversant l'épaisseur de ladite seconde couche, lesdits seconds motifs étant agencés selon des rangées parallèles et périodiques. La direction de périodicité des rangées des premiers motifs (31) est perpendiculaire à la direction de périodicité des rangées des seconds motifs (51). Les rangées des premiers motifs s'étendent sur une distance supérieure ou égale à la longueur d'onde dans le vide de l'onde optique destinée à être couplée. Les premiers motifs ont une largeur inférieure ou égale à un dixième de la longueur d'onde de l'onde optique destinée à être couplée et la période de ces motifs est comprise entre 50 nm et 1 μm. Les seconds motifs sont disposés de manière à former un réseau de diffraction périodique.

FIG.4

EP 2 141 520 A1

Printed by Jouve, 75001 PARIS (FR)

## Description

### DOMAINE TECHNIQUE

L'invention se rapporte à un dispositif de couplage, ainsi qu'à son procédé de fabrication, le dispositif de couplage étant insensible à la polarisation.

### ÉTAT DE LA TECHNIQUE ANTÉRIEURE

Dans le domaine de l'optoélectronique, les guides d'onde optiques planaires sont largement utilisés.

Il est en effet possible de réaliser dans ces guides d'onde optiques planaires des fonctions complexes de gestion de faisceaux optiques telles que le multiplexage, le démultiplexage, la modulation, le routage spectral...

Ces fonctions peuvent aussi bien être dédiées à des liaisons optiques très courtes distances, à l'échelle du millimètre (comme par exemple pour la communication intra-puce), qu'à des liaisons optiques très longues distances, de l'ordre de plusieurs km (comme par exemple dans le réseau métropolitain).

Il est possible d'intégrer sur une même puce et de manière compacte une haute densité de telles fonctions optiques. Pour cela, il est nécessaire de miniaturiser les circuits optiques, ce qui conduit à miniaturiser également la section des guides optiques, dans lesquels sont réalisées les circuits optiques, à des dimensions submicroniques.

Pour les applications moyennes et longues distances (c'est-à-dire pour des distances de quelques mètres à plusieurs kilomètres), le médium de transport optique privilégié entre deux circuits optiques à guide d'onde planaire est la fibre optique.

Le problème est que les dimensions de la section d'une fibre optique demeurent élevées (de dix à quelques dizaines de micromètres) par rapport à la section des guides d'onde planaires. Les fibres optiques ne peuvent donc pas être raccordées directement à un guide d'onde planaire, mais sont reliées par un dispositif appelé dispositif de couplage. Ce dispositif de couplage doit pouvoir compenser la désadaptation dimensionnelle entre le guide d'onde planaire et la fibre optique.

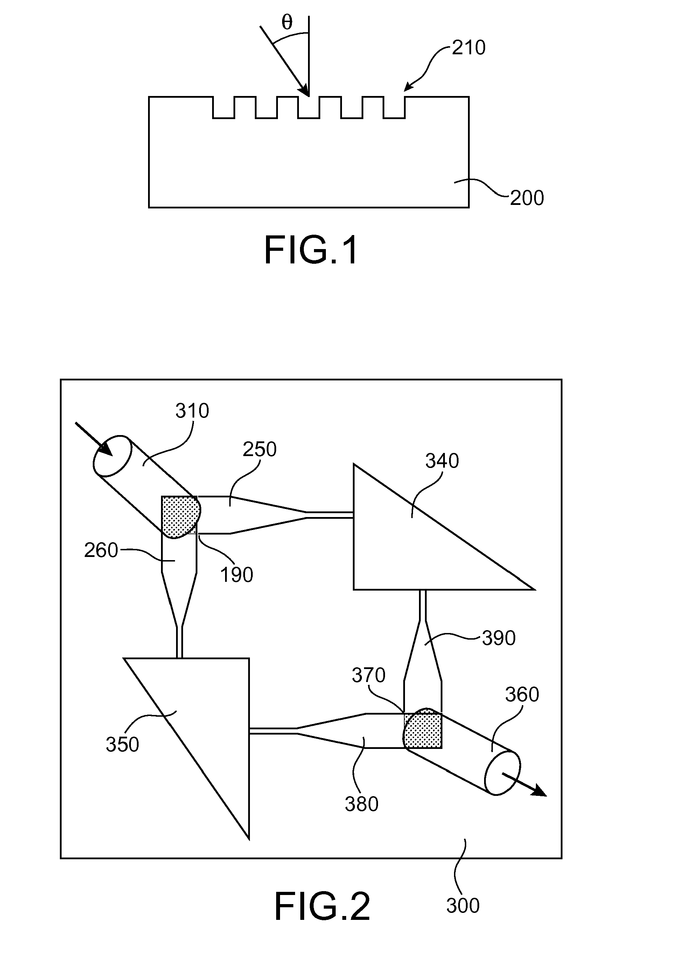

Une solution connue pour coupler une fibre optique et un circuit optique à guide d'onde planaire consiste à réaliser un réseau de diffraction 210 sur une surface du guide d'onde planaire 200 et à faire pénétrer dans le ou faire sortir la lumière du guide d'onde planaire par l'intermédiaire de ce réseau de diffraction (voir la figure 1).

L'inconvénient de cette solution est que l'angle d'incidence θ optimal pour le couplage de la lumière est différent pour les deux polarisations. En effet, l'angle d'incidence θ optimal pour le couplage correspond à l'angle de diffraction d'un mode guidé se propageant dans le guide d'onde planaire. Il est défini par la formule :

$$n_{eff} = \sin\theta + m.(\lambda/\Lambda)$$

où m est l'ordre de la diffraction, λ est la longueur d'onde de la lumière incidente, Λ est la période du réseau de diffraction et $n_{eff}$ est la constante de propagation d'un mode dans le guide d'onde planaire 200.

Or la constante de propagation d'un mode $n_{eff}$ dans un guide d'onde planaire est différente selon la polarisation. L'angle d'incidence θ optimal est donc différent pour les deux polarisations.

Ce problème est inhérent à l'asymétrie de la section des guides d'onde planaires. Du fait de cette asymétrie, les guides d'onde planaires sont sensibles à la polarisation de la lumière (on dit que les guides d'ondes optiques sont biréfringents). On rappelle que la biréfringence est classiquement définie comme étant la différence entre les indices effectifs affectés aux polarisations TE (pour « Transverse Electric » en anglais) et TM (pour « Transverse Magnetic » en anglais) :

$$B = n_{TE} - n_{TM}$$

Par convention, sur un guide d'onde réalisé dans un plan donné, les états de polarisation TE et TM sont définis tels que :

- TE correspond au champ électrique parallèle au plan du guide d'onde et au champ magnétique perpendiculaire au plan du guide d'onde,
- TM correspond au champ magnétique parallèle au plan du guide d'onde et au champ électrique perpendiculaire au plan du guide d'onde.

Ainsi, comme les guides d'onde sont très sensibles à l'état de polarisation de la lumière, il est préférable de les coupler avec des dispositifs dans lesquels l'état de polarisation est connu et maitrisé.

Or, l'état de polarisation d'un signal optique véhiculé dans une fibre optique est une quantité aléatoire qui change continuellement avec le temps.

Il est donc impossible de connecter directement un guide d'onde optique planaire avec une fibre optique. Il faut interposer un dispositif de couplage entre la fibre optique et le guide d'onde planaire qui soit indépendant de la polarisation de la lumière.

Il est connu du document **[1],** référencé à la fin de cette description, un tel dispositif de couplage, qui à la fois permet de coupler une fibre optique et un guide d'onde planaire, tout en étant indépendant de la polarisation de la lumière.

Ce dispositif de couplage comprend deux guides d'onde planaires 250, 260, disposés sur un substrat 300, qui s'entrecroisent selon un angle droit, et un réseau de diffraction 190 formé au niveau de l'intersection des deux guides d'onde planaires (voir la figure 2). La lumière arrive sur le réseau par l'intermédiaire d'une fibre optique 310. Ce dispositif de couplage dissocie un mode optique en deux modes optiques identiques de polarisation différente allant chacun dans un guide d'onde planaire 250, 260 et ayant chacun un état de polarisation TE ou TM différent.

Ici, chacune des deux polarisations doit être traitée par un circuit nanophotonique séparé 350, 340, ce qui oblige à doubler le nombre de circuits nanophotoniques nécessaires. Les deux états de polarisations sont ensuite redirigés vers leur guide d'onde planaire respectif 380, 390 et la lumière couplée ressort par le biais du réseau de diffraction 370 (situé à l'intersection des deux guides d'onde 380 et 390) jusque dans la fibre optique 360.

Ainsi, non seulement la solution proposée dans le document **[1]** présente l'inconvénient de doubler la complexité du dispositif final, mais en plus, pour des raisons de symétrie, les deux circuits nanophotoniques 350, 340 doivent être strictement identiques.

Les inventeurs ont donc cherché à simplifier les dispositifs de couplage existants et à concevoir ainsi un dispositif de couplage qui permette à la fois de coupler une lumière, par exemple d'une fibre optique vers un guide d'onde optique, tout en étant indépendant de la polarisation.

**EXPOSÉ DE L'INVENTION**

Ce but est atteint grâce à un dispositif de couplage optique destiné à coupler optiquement une onde optique d'un premier composant optique vers un second composant optique, ledit dispositif de couplage comprenant :

- un substrat support,
- une première couche disposée sur le substrat support et comprenant des premiers motifs réalisés dans l'épaisseur de ladite première couche, lesdits premiers motifs étant agencés selon des rangées parallèles et périodiques,
- une seconde couche disposée sur la première couche et comprenant des seconds motifs traversant l'épaisseur de ladite seconde couche, lesdits seconds motifs étant agencés selon des rangées parallèles et périodiques,

dans lequel la direction de périodicité des rangées des premiers motifs est perpendiculaire à la direction de périodicité des rangées des seconds motifs, dans lequel les rangées des premiers motifs s'étendent sur une distance supérieure ou égale à la longueur d'onde dans le vide de l'onde optique destinée à être couplée, dans lequel les premiers motifs ont une largeur inférieure ou égale à un dixième de la longueur d'onde de l'onde optique destinée à être couplée et la période de ces premiers motifs est comprise entre 50 nm et 1 $\mu$m, la largeur étant la dimension d'un motif dans la direction de périodicité,

et dans lequel les seconds motifs sont disposés de manière à former un réseau de diffraction périodique.

Avantageusement, et pour des longueurs d'ondes de travail relevant des applications télécoms courantes (1,3 - 1,8 $\mu$m), le réseau de diffraction formé par les seconds motifs a une période comprise entre 300 nm et 1 $\mu$m.

La structuration particulière de la première couche permet de rendre le dispositif de couplage insensible à la polarisation en compensant la biréfringence de ladite première couche.

Avantageusement, l'onde optique destinée à être couplée a une longueur d'onde comprise entre 0,8 $\mu$m et 10 $\mu$m.

Avantageusement, la première couche a une épaisseur inférieure ou égale à 10 micromètres. Plus particulièrement, la première couche peut avantageusement avoir une épaisseur comprise entre 1 micromètre et 50 nanomètres.

Avantageusement, les premiers motifs ont la même profondeur.

Avantageusement, les premiers motifs sont réalisés dans la totalité de l'épaisseur de la première couche.

Avantageusement, les premiers et seconds motifs sont des protubérances et/ou des évidements.

Selon un mode de réalisation, les protubérances sont choisies parmi des colonnes ou des nervures.

Selon un autre mode de réalisation, les évidements sont choisis parmi des trous ou des fentes.

Avantageusement, les protubérances ou les évidements ont une section choisie parmi une section circulaire, une section carrée ou une section rectangulaire.

Avantageusement, tous les premiers et/ou les seconds motifs d'une même rangée ont la même largeur.

Avantageusement, au moins une rangée parmi les rangées de premiers et seconds motifs comporte un seul motif, ce motif étant une nervure ou une fente.

Avantageusement, toutes les rangées de premiers et/ou de seconds motifs comprennent un seul motif, le motif étant une fente ou une nervure.

Avantageusement, les premiers motifs de la première couche sont également présents dans la seconde couche.

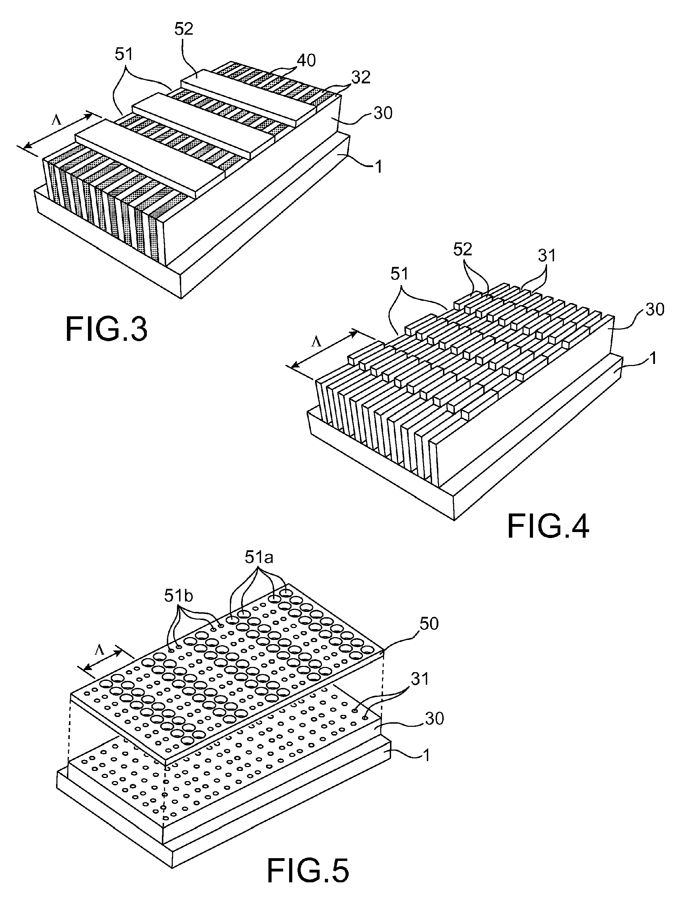

Selon un mode de réalisation, les seconds motifs sont des colonnes ou des trous ayant des diamètres a et b différents, les colonnes ou les trous de diamètre a et les colonnes ou les trous de diamètre b étant dans des rangées distinctes, et les rangées de motifs de diamètre a et les rangées de motifs de diamètre b étant répétées de manière périodique. La répétition des rangées de seconds motifs de diamètre a et de diamètre b permet de former un réseau de diffraction périodique (voir la figure 5).

Avantageusement, les premiers motifs sont remplis avec un fluide ou un matériau solide différent du matériau de la première couche.

Avantageusement, les seconds motifs sont remplis avec un fluide ou un matériau solide différent du matériau de la seconde couche.

Avantageusement, le matériau solide utilisé pour remplir les premiers motifs et/ou les seconds motifs est choisi parmi les oxydes (par exemple $SiO_2$, $TiO_2$ ...) ou les nitrures (par exemple $Si_3N_4$...).

Avantageusement, le dispositif de couplage optique comprend en outre une structure réfléchissante placée entre le substrat support et la première couche, cette structure réfléchissante étant choisie parmi un miroir de Bragg, une couche en métal ou une couche de cristal photonique. La présence de cette structure réfléchissante permet d'augmenter le taux de couplage du dispositif de couplage.

Le dispositif de couplage selon l'invention permet de coupler deux composants optiques. Il est particulièrement utile pour coupler deux composants optiques qui sont dans des plans orientés l'un par rapport à l'autre, par exemple dans des plans orientés d'un angle compris entre 45° et 90°. Le premier composant optique peut être une fibre optique et le second composant optique peut être un guide d'onde optique.

L'invention concerne également un circuit optique comprenant un dispositif de couplage optique telle que décrit ci-dessus, ainsi qu'un guide optique planaire, ledit guide optique planaire étant contigu à la première couche du dispositif de couplage.

L'invention concerne également un procédé de réalisation d'un tel dispositif de couplage. Ce procédé de réalisation comprend les étapes suivantes :

- fourniture d'un substrat support,
- fourniture d'une première couche sur le substrat support, ladite première couche comprenant des premiers motifs,
- fourniture d'une seconde couche sur la première couche, ladite seconde couche comprenant des seconds motifs.

La première et la seconde couches peuvent être en un même matériau ou en des matériaux différents.

Selon un premier mode de réalisation, la fourniture de la première (seconde) couche comprenant les premiers (seconds) motifs est obtenue par dépôt de la première (seconde) couche et par gravure des premiers (seconds) motifs dans ladite première (seconde) couche.

Selon un second mode de réalisation, la fourniture de la première couche comprenant les premiers motifs et la fourniture de la seconde couche comprenant les seconds motifs sont obtenues par dépôt d'une seule et même couche sur le substrat support, par gravure des premiers motifs dans l'épaisseur de la couche, puis par gravure des seconds motifs en surface de la couche.

Enfin, l'invention concerne un procédé de réalisation d'un circuit optique comprenant un dispositif de couplage tel que décrit ci-dessus ainsi qu'un guide d'onde planaire. Le procédé de réalisation d'un tel circuit optique comprend les étapes suivantes :

a) fourniture d'un substrat support,
b) fourniture d'une première couche sur le substrat support, ladite première couche comprenant une zone comportant les premiers motifs,
c) fourniture d'une seconde couche sur la zone de la première couche, ladite seconde couche comprenant les seconds motifs.

Selon un premier mode de réalisation, l'étape b) est obtenue par dépôt d'une première couche sur le substrat support et gravure des premiers motifs dans ladite première couche et l'étape c) est obtenue par dépôt d'une seconde couche sur la zone de la première couche comprenant les premiers motifs et gravure des seconds motifs dans ladite seconde couche.

Selon un second mode de réalisation, les étapes b) et c) sont obtenues par dépôt d'une couche sur le substrat support, par gravure des premiers motifs dans l'épaisseur de ladite couche, par gravure en surface des seconds motifs dans une zone de la couche et par gravure en surface du reste de la seconde couche.

Selon un troisième mode de réalisation, l'étape b) est obtenue par dépôt d'une première couche sur le substrat support et gravure des premiers motifs dans une zone de ladite première couche et l'étape c) est obtenue par dépôt d'une seconde couche, par gravure des seconds motifs dans une zone surplombant la zone de la première couche et par gravure totale de la seconde couche hors de ladite zone de la seconde couche.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1, déjà décrite ci-dessus, représente une vue en coupe d'un réseau de diffraction réalisé dans un guide d'onde optique connu de l'art antérieur,
- la figure 2, déjà décrite ci-dessus, représente une vue de dessus d'un dispositif de couplage connu de l'art antérieur,
- la figure 3 représente une vue de dessus en perspective d'un exemple de dispositif de couplage selon l'invention,
- la figure 4 représente une vue de dessus en perspective d'un autre exemple de dispositif de couplage selon l'invention,
- la figure 5 représente une vue de dessus éclatée et en perspective d'un autre exemple de dispositif de couplage selon l'invention,
- les figures 6A à 6F représentent les étapes du procédé de fabrication du dispositif de couplage selon l'invention,

- la figure 7 représente une vue de dessus de la figure 6E,
- la figure 8 représente un détail de la figure 7.

Il faut noter que les épaisseurs des couches dans ces figures ne sont pas à l'échelle.

## EXPOSÉ DÉTAILLÉ DE MODES DE RÉALISATION PARTICULIERS

Comme nous l'avons vu ci-dessus, le dispositif de couplage, selon les motifs choisis, peut avoir différentes configurations.

Comme illustré dans la figure 3, la première couche 30 peut comprendre des fentes de largeur uniforme et espacées de manière périodique, les fentes traversant la totalité de l'épaisseur de la première couche. Par exemple, la première couche peut avoir une épaisseur de 220 nm, la largeur des fentes étant de 80 nm et la période entre les fentes étant de 120 nm. Dans la figure 3, les fentes réalisées dans la première couche 30 sont comblées avec un matériau différent : on obtient alors des bandes 32 et des bandes 40 en matériaux différents.

La seconde couche quant à elle comprend également des fentes 51 de largeur uniforme, espacées de manière périodique et disposées perpendiculairement aux fentes de la première couche. On obtient ainsi des bandes 52 perpendiculaires aux bandes 32. La seconde couche peut par exemple avoir une épaisseur de 150 nm, la largeur des fentes 51 étant de 300 nm et la période entre les fentes étant de 400 nm.

On remarque que les fentes 51 de la seconde couche ont une période $\Lambda$ et une largeur beaucoup plus importantes que celles de la première couche. Cela s'explique par le fait que la structuration de la première couche 30 a pour but de compenser la biréfringence de la première couche, tandis que la structuration de la seconde couche permet de diffracter l'onde optique.

Il est à noter que les première et seconde couches peuvent être en deux matériaux différents ou en un même matériau.

On a représenté dans la figure 4 un dispositif de couplage similaire à celui représenté dans la figure 3, à la différence que la seconde couche comporte à la fois des seconds motifs 51 (fentes larges), ainsi que les premiers motifs 31 de la première couche (fentes plus fines), permettant d'obtenir de fines bandes 52. Dans cet exemple de réalisation, la taille des seconds motifs est choisie suffisamment petite de manière à ce qu'ils ne provoquent pas d'effet de diffraction ni dans la première couche, ni dans la seconde couche (couche comportant ici à la fois les premiers motifs et les seconds motifs), l'effet de diffraction étant assuré par le réseau de diffraction inscrit dans la seconde couche et formé par les seconds motifs 51 (fentes larges).

Dans la figure 5, la première couche 30 comporte des premiers motifs 31 qui sont par exemple des trous de section circulaire uniforme espacés les uns des autres de manière uniforme selon des rangées périodiques et la seconde couche 50 comporte des seconds motifs (51a, 51b) qui sont des trous de section circulaire ayant deux diamètres différents et qui sont agencés selon des rangées périodiques. Ici, le réseau de diffraction est obtenu dans la seconde couche en plaçant deux rangées de trous ayant le plus gros diamètre, suivies de deux rangées de trous de plus petit diamètre et ainsi de suite. La variation de diamètre induit une variation locale d'indice à la période nécessaire pour créer un réseau de diffraction et donc de coupler la lumière dans la première couche.

Nous allons à présent détailler les étapes du procédé de réalisation d'un dispositif de couplage selon l'invention.

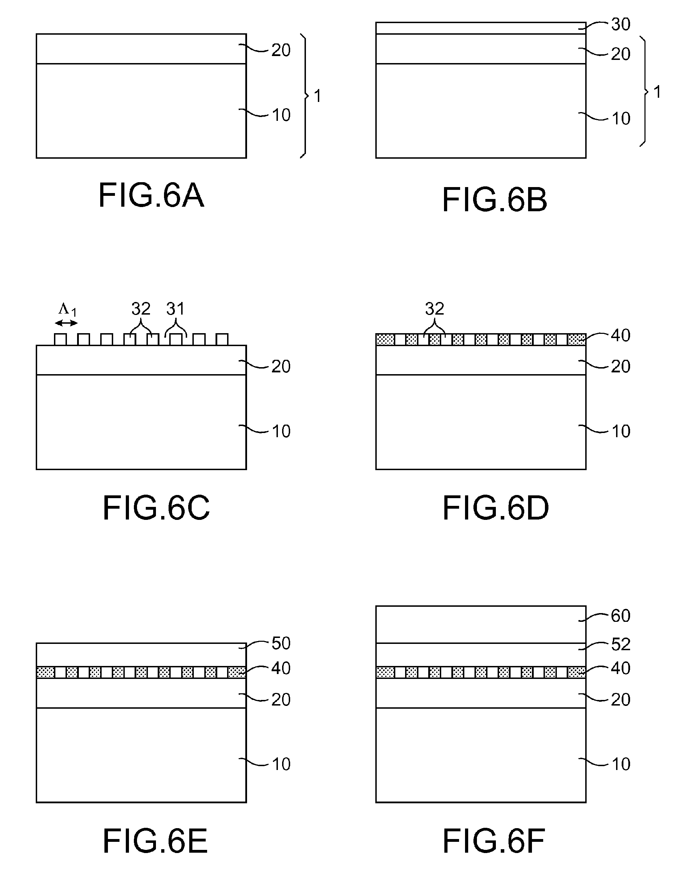

Tout d'abord, on prépare un substrat support 1 adéquat. Dans notre exemple, le substrat support 1 comprend un substrat 10 recouvert d'une couche supérieure 20 (figure 6A). La surface du substrat support qui sera en contact avec la première couche doit avoir un indice de réfraction inférieur à celui de la première couche, afin d'éviter que la lumière ne soit évacuée dans le substrat support. Par exemple, le substrat support 1 peut être constitué d'un substrat 10 de silicium recouvert d'une couche 20 de dioxyde de silicium ayant une épaisseur d'environ 1 micromètre.

Sur un substrat support 1, nous déposons une première couche 30 (figure 6B). Le matériau de la première couche peut être choisi parmi un matériau semi-conducteur, un matériau diélectrique ou un mélange des deux. Par exemple, le guide peut être réalisé en silicium cristallin ou amorphe, en InP, en germanium ou en silice dopée au phosphore ...

La première couche 30 est dans notre exemple une couche de silicium polycristallin ayant une épaisseur comprise entre 200 nanomètres et 1 micromètre.

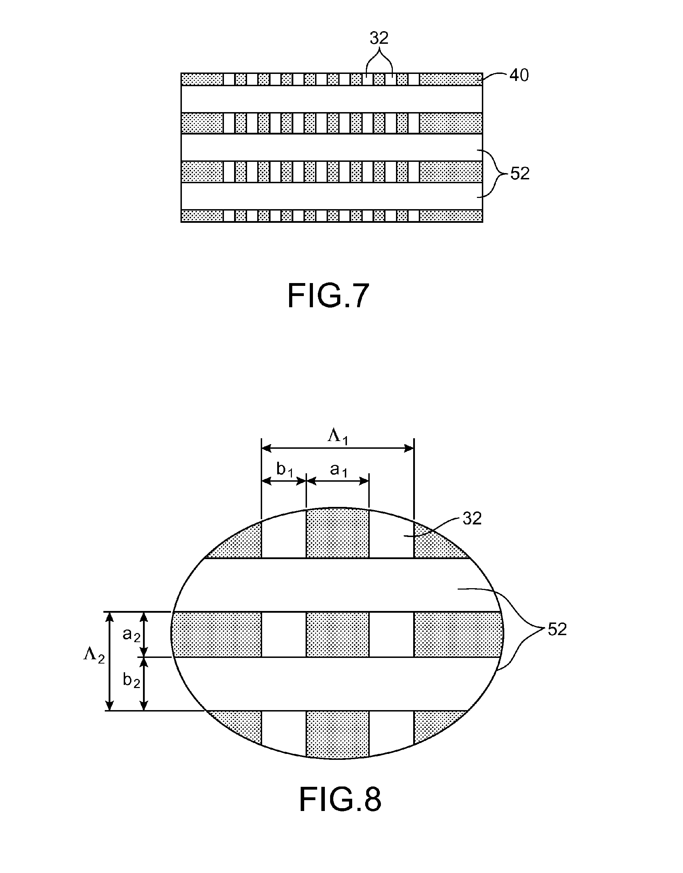

Puis, on définit la structuration de la première couche 30, qui va servir à compenser la dispersion en polarisation, en réalisant les premiers motifs 31 (figure 6C). Dans notre exemple, les premiers motifs 31 sont des fentes et on obtient ainsi des bandes 32. Les fentes ont par exemple une largeur $a_1$ de 80 nm et sont espacées d'un pas $b_1$ de 20 nm. La période $\Lambda_1$ des fentes est alors de 100 nm (figure 8).

Les fentes 31 peuvent être laissées vides ou remplies à l'aide d'un fluide ou d'un matériau 40 différent du matériau de la première couche 30. L'adjonction d'un fluide ou d'un matériau dans les premiers motifs permet de modifier la biréfringence de la première couche. Ainsi, on peut par exemple réaliser une structuration de la première couche qui permette d'obtenir une biréfringence B non nulle et l'adjonction d'un matériau précis dans les premiers motifs permettra alors d'atteindre une biréfringence nulle. Dans notre exemple, nous remplissons les fentes 31 avec du dioxyde de silicium (figure 6E). Pour cela, on dépose une couche de dioxyde de silicium ayant une épaisseur de 1,5 micromètres et on planarise la couche par polissage mécano-chimique afin d'enlever le dioxyde de silicium dépassant des fentes 31.

Ensuite, on forme une seconde couche 50 sur la première couche 30 structurée (figure 6E). Dans notre exemple, on dépose une couche de $Si_3N_4$ ayant une épaisseur de 50 nanomètres. Cette seconde couche 50 est ensuite structurée ; dans notre exemple, les seconds motifs 51 sont des fentes et on obtient ainsi des bandes 52. Les fentes ont une largeur $a_2$ de 300 nm et sont espacées d'un pas $b_2$ de 60 nm et ont une période $\Lambda_2$ de 360 nm (figure 8). On remarque que les fentes 31 de la première couche et les fentes 51 de la seconde couche sont réalisées de sorte qu'elles se croisent selon un angle de 90° (figure 7). Cela permet de préserver la direction et la polarisation du faisceau une fois couplé dans le dispositif.

On obtient alors un dispositif de couplage 100 selon l'invention.

Les seconds motifs de la seconde couche peuvent, comme les premiers motifs de la première couche, être laissés vides ou remplis avec un fluide ou un matériau différent du matériau de la seconde couche.

Par ailleurs, on peut éventuellement déposer une couche de protection 60 sur la seconde couche structurée, comme représenté dans la figure 6F. Cette couche de protection permet de protéger les motifs afin de conserver les mêmes paramètres géométriques au cours du temps.

La structuration des première et seconde couches est réalisée selon des techniques classiques connues de l'homme du métier, par exemple, par lithographie et gravure.

Les premiers motifs et les seconds motifs n'ont pas la même fonction et n'ont donc pas les mêmes dimensions. Les premiers motifs permettent de compenser la biréfringence de la première couche jusqu'à obtenir une biréfringence sensiblement nulle, tandis que les seconds motifs servent à créer un réseau de diffraction permettant de diffracter la lumière.

La largeur des premiers motifs $a_1$ doit être comprise entre 30 nm et 100 nm, l'espace entre les premiers motifs $b_1$ doit être compris entre 30 nm et 100 nm et la période $\Lambda_1$ entre les premiers motifs est comprise entre 50 nm et 200 nm.

La largeur des seconds motifs $a_2$ doit être comprise entre 200 nm et 500 nm, l'espace entre les seconds motifs $b_2$ doit être compris entre 50 nm et 300 nm et la période $\Lambda_2$ entre les seconds motifs est comprise entre 250 nm et 800 nm.

Le dispositif de couplage selon l'invention présente de nombreux avantages.

Il permet d'obtenir un couplage adéquat (avec des pertes d'insertion inférieures à 3dB) pour toutes les polarisations au sein d'un seul et même dispositif de couplage, sans avoir à séparer les polarisations et en traitant les deux états de polarisation en même temps.

Le dispositif de couplage selon l'invention peut être utilisé dans de nombreux domaines. Il peut ainsi être utilisé en optoélectronique, pour réaliser des composants optoélectroniques d'optique intégrée exploitant des guides d'onde optiques planaires qui permettent un couplage de la lumière vers ces guides ou à partir de ces guides, pour réaliser des composants optoélectroniques intervenant dans les réseaux de transmission de données par fibre optique, pour réaliser des circuits photoniques tels que des guides d'onde planaires, des circuits micro-nano-structurés utilisant des guides d'onde planaire à faible ou à fort contraste d'indice (par exemple un coeur en silicium ou en un autre matériau semi-conducteur, et une couche de gaine en matériau diélectrique).

On peut ainsi réaliser des circuits optiques comprenant à la fois un dispositif de couplage et un guide d'onde optique planaire en réalisant le guide d'onde à partir d'une partie de la première couche servant à réaliser le dispositif de couplage. Ainsi, contrairement à l'art antérieur et en particulier du document **[1]**, les circuits optiques comprenant des guides d'onde et des dispositifs de couplage selon l'invention sont peu encombrants, étant donné qu'il n'est plus nécessaire de doubler les guides d'onde pour chaque état de polarisation.

## BIBLIOGRAPHIE

[1] EP 1 353 200, déposé le 9 avril 2003.

## Revendications

1. Dispositif de couplage optique (100) destiné à coupler optiquement une onde optique d'un premier composant optique vers un second composant optique, ledit dispositif de couplage comprenant :

   - un substrat support (1),
   - une première couche (30) disposée sur le substrat support et comprenant des premiers motifs (31) réalisés dans l'épaisseur de ladite première couche, lesdits premiers motifs étant agencés selon des rangées parallèles et périodiques,
   - une seconde couche (50) disposée sur la première couche (30) et comprenant des seconds motifs (51) traversant l'épaisseur de ladite seconde couche, lesdits seconds motifs étant agencés selon des rangées parallèles et périodiques,

   dans lequel la direction de périodicité des rangées des premiers motifs (31) est perpendiculaire à la direction de périodicité des rangées des seconds motifs (51),
   dans lequel les rangées des premiers motifs s'étendent sur une distance supérieure ou égale à la longueur d'onde dans le vide de l'onde optique destinée à être couplée,

dans lequel les premiers motifs ont une largeur inférieure ou égale à un dixième de la longueur d'onde de l'onde optique destinée à être couplée et la période de ces motifs est comprise entre 50 nm et 1 μm, la largeur étant la dimension d'un motif dans la direction de périodicité,

et dans lequel les seconds motifs sont disposés de manière à former un réseau de diffraction périodique.

**2.** Dispositif de couplage optique selon la revendication 1, dans lequel le réseau de diffraction formé par les seconds motifs (51) a une période comprise entre 300 nm et 1 μm.

**3.** Dispositif de couplage optique selon la revendication 1, dans lequel les premiers (31) et seconds (51) motifs sont des protubérances et/ou des évidements.

**4.** Dispositif de couplage optique selon la revendication 3, dans lequel les protubérances sont choisies parmi des colonnes ou des nervures.

**5.** Dispositif de couplage optique selon la revendication 3, dans lequel les évidements sont choisis parmi des trous ou des fentes.

**6.** Dispositif de couplage optique selon la revendication 4 ou 5, dans lequel les protubérances ou les évidements ont une section choisie parmi une section circulaire, une section carrée ou une section rectangulaire.

**7.** Dispositif de couplage optique selon l'une quelconque des revendications 1 à 6, dans lequel tous les premiers et/ou les seconds motifs d'une même rangée ont la même largeur.

**8.** Dispositif de couplage optique selon la revendication 4 ou 5, dans lequel au moins une rangée parmi les rangées de premiers et seconds motifs comporte un seul motif, ce motif étant une nervure ou une fente.

**9.** Dispositif de couplage optique selon la revendication 8, dans lequel toutes les rangées de premiers et/ou de seconds motifs comprennent un seul motif, le motif étant une fente ou une nervure.

**10.** Dispositif de couplage optique selon l'une quelconque des revendications 1 à 9, dans lequel les premiers motifs (31) de la première couche (30) sont également présents dans la seconde couche (50).

**11.** Dispositif de couplage optique selon la revendication 1, dans lequel les seconds motifs sont des colonnes ou des trous ayant des diamètres a et b différents, les colonnes ou les trous de diamètre a (51a) et les colonnes ou les trous de diamètre b (51b) étant dans des rangées distinctes, et les rangées de motifs de diamètre a et les rangées de motifs de diamètre b étant répétées de manière périodique.

**12.** Dispositif de couplage optique selon la revendication 1, dans lequel les premiers motifs sont remplis avec un fluide ou un matériau solide (40) différent du matériau de la première couche (30).

**13.** Dispositif de couplage optique selon la revendication 1, dans lequel les seconds motifs (51) sont remplis avec un fluide ou un matériau solide différent du matériau de la seconde couche (50).

**14.** Dispositif de couplage optique selon la revendication 12 ou 13, dans lequel le matériau solide utilisé pour remplir les premiers motifs et/ou les seconds motifs est choisi parmi les oxydes ou les nitrures.

**15.** Dispositif de couplage optique selon la revendication 14, dans lequel le matériau solide utilisé pour remplir les premiers motifs et/ou les seconds motifs est choisi parmi $SiO_2$, $TiO_2$, $Si_3N_4$.

**16.** Dispositif de couplage optique selon l'une quelconque des revendications 1 à 15, comprenant en outre une structure réfléchissante placée entre le substrat support et la première couche, cette structure réfléchissante étant choisie parmi un miroir de Bragg, une couche en métal ou une couche de cristal photonique.

**17.** Circuit optique comprenant un dispositif de couplage optique (100) selon l'une quelconque des revendications 1 à 16, ainsi qu'un guide optique planaire, ledit guide optique planaire étant contigu à la première couche du dispositif de couplage.

**18.** Procédé de réalisation d'un dispositif de couplage selon l'une quelconque des revendications 1 à 16, ledit procédé comprenant les étapes suivantes :

- fourniture d'un substrat support (1),
- fourniture d'une première couche (30) sur le substrat support, ladite première couche comprenant des premiers motifs (31),
- fourniture d'une seconde couche (50) sur la première couche, ladite seconde couche comprenant des seconds motifs (51).

**19.** Procédé de réalisation d'un dispositif de couplage selon la revendication 18, dans lequel la fourniture de la première (seconde) couche comprenant les premiers (seconds) motifs est obtenue par dépôt de la première (seconde) couche et par gravure des premiers (seconds) motifs dans ladite première (seconde) couche.

**20.** Procédé de réalisation d'un dispositif de couplage selon la revendication 18, dans lequel la fourniture de la première couche (30) comprenant les premiers motifs (31) et la fourniture de la seconde couche (50) comprenant les seconds motifs (51) sont obtenues par dépôt d'une seule et même couche sur le substrat support, par gravure des premiers motifs dans l'épaisseur de la couche, puis par gravure des seconds motifs en surface de la couche.

**21.** Procédé de réalisation d'un circuit optique comprenant un dispositif de couplage selon l'une quelconque des revendications 1 à 16 et un guide d'onde planaire, ledit procédé comprenant les étapes suivantes :

a) fourniture d'un substrat support,
b) fourniture d'une première couche sur le substrat support, ladite première couche comprenant une zone comportant les premiers motifs,
c) fourniture d'une seconde couche sur la zone de la première couche, ladite seconde couche comprenant les seconds motifs.

**22.** Procédé de réalisation d'un circuit optique selon la revendication 21, dans lequel l'étape b) est obtenue par dépôt d'une première couche sur le substrat support et gravure des premiers motifs dans ladite première couche et l'étape c) est obtenue par dépôt d'une seconde couche sur la zone de la première couche comprenant les premiers motifs et gravure des seconds motifs dans ladite seconde couche.

**23.** Procédé de réalisation d'un circuit optique selon la revendication 21, dans lequel les étapes b) et c) sont obtenues par dépôt d'une couche sur le substrat support, par gravure des premiers motifs dans l'épaisseur de ladite couche, par gravure en surface des seconds motifs dans une zone de la couche et par gravure en surface du reste de la seconde couche.

**24.** Procédé de réalisation d'un circuit optique selon la revendication 21, dans lequel l'étape b) est obtenue par dépôt d'une première couche sur le substrat support et gravure des premiers motifs dans une zone de ladite première couche et l'étape c) est obtenue par dépôt d'une seconde couche, par gravure des seconds motifs dans une zone surplombant la zone de la première couche et par gravure totale de la seconde couche hors de ladite zone de la seconde couche.

FIG.1

FIG.2

FIG.3

FIG.4

FIG.5

FIG.6A

FIG.6B

FIG.6C

FIG.6D

FIG.6E

FIG.6F

FIG.7

FIG.8

Europäisches
Patentamt

European
Patent Office

Office européen
des brevets

**RAPPORT DE RECHERCHE EUROPEENNE**

Numéro de la demande

EP 09 16 4246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2007/070276 A1 (TAN KIM L [US] ET AL) 29 mars 2007 (2007-03-29) | 1,7, 12-15, 18,21 | INV. G02B5/18 G02B6/30 |
| Y | * alinéas [0137] - [0140], [0156] - [0159]; figures 11,16 * ----- | 2-6,8,9, 11,19 | G02B6/34 |
| Y | US 2005/146789 A1 (WEGMANN ULRICH [DE] ET AL) 7 juillet 2005 (2005-07-07) * alinéa [0027] - alinéa [0034]; figures 1,2 * ----- | 2-6,8,9, 11,19 | |
| A | EP 1 353 200 A (IMEC INTER UNI MICRO ELECTR [BE]; UNIV GENT [BE]) 15 octobre 2003 (2003-10-15) * le document en entier * ----- | 1-24 | |

DOMAINES TECHNIQUES
RECHERCHES (IPC)

G02B

Le présent rapport a été établi pour toutes les revendications

| Lieu de la recherche | Date d'achèvement de la recherche | Examinateur |
|---|---|---|
| Berlin | 3 novembre 2009 | Andreassen, Jon |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**                EP 09 16 4246

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-11-2009

| Document brevet cité au rapport de recherche | Date de publication | Membre(s) de la famille de brevet(s) | Date de publication |
|---|---|---|---|
| US 2007070276 A1 | 29-03-2007 | AUCUN | |
| US 2005146789 A1 | 07-07-2005 | AU 2003304304 A1<br>CN 1584536 A<br>WO 2005003862 A1<br>JP 2005043353 A<br>US 2008252888 A1 | 21-01-2005<br>23-02-2005<br>13-01-2005<br>17-02-2005<br>16-10-2008 |
| EP 1353200 A | 15-10-2003 | AT 384969 T<br>DE 60318762 T2<br>US 2003235370 A1 | 15-02-2008<br>12-02-2009<br>25-12-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1353200 A